# EUROPÄISCHE PATENTSCHRIFT

(11) **EP 0 860 570 B1**
(45) Veröffentlichungstag und Bekanntmachung des Hinweises auf die Patenterteilung: **02.05.2003**
(21) Anmeldenummer: 98103135.4
(22) Anmeldetag: 23.02.1998
(51) Int. Cl.: B23P 21/00, E05C 9/24, E05D 15/52

(54) **Flügellagerteil**
Wing bearing part
Elément de palier de battant

(30) Priorität: 25.02.1997 DE 19707496
(43) Veröffentlichungstag der Anmeldung: 26.08.1998
(73) Patentinhaber: Aug. Winkhaus GmbH & Co. KG, 48291 Telgte (DE)
(72) Erfinder: Lau, Wolfgang, 48291 Telgte (DE); Schenck, Hans-Peter, 48291 Telgte (DE); Renz, Dieter, 49479 Ibbenbüren (DE)
(74) Vertreter: Prechtel, Jörg, Dipl.-Phys. Dr.

(56) Entgegenhaltungen:
- EP-A- 0 683 297
- DD-A- 256 240
- DE-A- 4 444 178
- DE-U- 9 308 670

## Beschreibung

Die vorliegende Erfindung betrifft ein Flügellagerteil, insbesondere für einen Fenster- oder Türflügel, welches Flügellagerteil zur im wesentlichen automatischen Montage an einem Flügelrahmen vermittels eines Montageautomaten ausgebildet ist, der einen Greifer mit einem Zentrier/Anlage-Winkelteil umfaßt, das zwei unter einem vorbestimmten Winkel zueinander stehende Zentrier/Anlage-Flächen zur Zentrierung/Anlage eines Eckbereichs des Flügellagerteils aufweist.

Aus der EP 0 683 297 A1 ist es bekannt, Eckumlenkungen an Flügelrahmen vermittels eines Montageautomaten anzubringen. Der Montageautomat weist ein Zentrier/Anlage-Winkelteil mit zwei näherungsweise orthogonal zueinander stehenden Zentrier/Anlage-Flächen auf. Beim Anbringen einer Eckumlenkung an einer Ecke eines Flügelrahmens ergreift der Montageautomat mit seinem Greifer eine in einem Magazin enthaltene Eckumlenkung derart, daß ein Eckbereich derselben, d. h. ein Verbindungsbereich zweier Winkelschenkel der Eckumlenkung an dem Zentrier/Anlage-Winkelteil anliegt. Das heißt, an jeder der Zentrier/Anlage-Flächen liegt einer der Winkelschenkel der Eckumlenkung an. Durch Greiferabschnitte wird dann die Ecklumlenkung in dieser Lage am Greifer festgelegt. In dieser bezüglich des Greifers zentrierten Stellung wird nun die Eckumlenkung zusammen mit dem Greifer in Richtung auf eine Ecke des Flügelrahmens zu bewegt. Insbesondere wird dabei der Greifer mit der daran gehaltenen Eckumlenkung entlang einer vorbestimmten Linie auf das Eck des Flügelrahmens zu bewegt. Diese Linie kann entweder eine Diagonale des Flügelrahmens sein oder kann beispielsweise auch eine Winkelhalbierende des Flügelrahmenecks sein.

Die Eckumlenkungen sind zumindest in ihren durch den Greifer ergriffenen Bereich symmetrisch ausgebildet, so daß sie durch das Zentrier/Anlage-Winkelteil zentriert gehalten sind. Bewegt sich nun der Montageautomat mit seinem Greifer entlang einer beispielsweise durch die Winkelhalbierende des Flügelrahmenecks gebildete Bewegungsrichtung auf den Flügelrahmen zu, wobei das Zentrier/Anlage-Winkelteil mit der daran gehaltenen Eckumlenkung in der Bewegungsrichtung vorne gehalten ist, so stimmt eine Winkelhalbierende der in dem Zentrier/Anlage-Winkelteil zentrierten Eckumlenkung mit der Bewegungslinie überein. Infolge dieser Übereinstimmung trifft der Montageautomat mit der Eckumlenkung genau auf das Eck des Flügelrahmens, ohne daß weitere korrigierende seitliche Verschiebebewegungen erforderlich sind. Voraussetzung hierfür ist jedoch die bereits angesprochene symmetrische Ausbildung der Eckumlenkungen in ihrem mit dem Greifer zusammenwirkenden Bereich.

Bei Flügellagerteilen, welche ein aus zwei Winkelschenkel gebildetes Winkelteil sowie ein an einem der Winkelschenkel festgelegtes Lagerteil umfassen, besteht nun das Problem, daß beim Ergreifen durch den Greifer mit seinem Zentrier/Anlage-Winkelteil das Flügellagerteil nicht zentriert gehalten werden kann, da an einer der Zentrier/Anlage-Flächen nicht der zugeordnete Winkelschenkel, sondern ein Befestigungsabschnitt oder dergleichen des Lagerteils zu liegen kommt, so daß das Flügellagerteil aus einer zentrierten Position herausverschoben ist. Dies bedingt, daß zur nachfolgenden Montage mit einem herkömmlichen Montageautomat, der auch zur Montage von Eckumlenkungen geeignet sein soll, korrigierende Bewegungen durchgeführt werden müssen, um eine exakte Positionierung des Flügellagerteils am Flügelrahmen zu erhalten.

Es ist daher die Aufgabe der vorliegenden Erfindung, ein Flügellagerteil, insbesondere für einen Fenster- oder Türflügel vorzusehen, welches mit einem herkömmlichen Montageautomaten an einem Flügelrahmen angebracht werden kann, ohne daß an dem Montageautomaten spezielle Maßnahmen für den Montagevorgang vorgenommen werden müssen.

Gemäß der vorliegenden Erfindung wird diese Aufgabe gelöst durch ein Flügellagerteil, insbesondere für einen Fensteroder Türflügel, welches Flügellagerteil zur im wesentlichen automatischen Montage an einem Flügelrahmen vermittels eines Montageautomaten ausgebildet ist, der einen Greifer mit einem Zentrier/Anlage-Winkelteil umfaßt, das zwei unter einem vorbestimmten Winkel zueinander stehende Zentrier/Anlage-Flächen zur Zentrierung/Anlage eines Eckbereichs des Flügellagerteils aufweist, wobei das Flügellagerteil umfaßt: einen ersten Winkelschenkel, einen zweiten Winkelschenkel, welcher in dem Eckbereich mit dem ersten Winkelschenkel im wesentlichen unter dem vorbestimmten Winkel, vorzugsweise einem näherungsweise rechten Winkel, verbunden ist, wobei jedem der Winkelschenkel eine der Zentrier/Anlage-Flächen des Zentrier/Anlage-Winkelteils zugeordnet ist zur Zentrierung/Anlage des Flügellagerteils am Zentrier/Anlage-Winkelteil, ein Lagerteil, welches mit einem Befestigungsabschnitt durch Befestigungsbolzen, Anschweißen oder dergleichen an einer Außenseite von einem der Winkelschenkel angebracht ist, wobei der eine Winkelschenkel über einen an dem Befestigungsabschnitt und/oder den Befestigungsbolzen oder dergleichen gebildeten ersten Anlagebereich zur Anlage an einer der Zentrier/Anlage-Flächen bringbar ist, eine Anlageerhebung an dem anderen der Winkelschenkel, welche Anlageerhebung einen zweiten Anlagebereich vorsieht, über den der andere Winkelschenkel zur Anlage an der anderen der Zentrier/Anlage-Flächen des Zentrier/Anlage-Winkelteils bringbar ist.

Bei dem erfindungsgemäßen Flügellagerteil wird also der durch das Aufbringen des Lagerteils an einem der Winkelschenkel erzeugte Versatz durch das Vorsehen der Anlageerhebung an dem anderen der Winkelschenkel im wesentlichen kompensiert, so daß erneut eine im wesentlichen zentrierte Anlage des erfindungsgemäßen Flügellagerteils am Zentrier/Anlage-Winkelteil des Greifers bei Montage des Flügellagerteils an einen Flügelrahmen erhalten wird. Änderungen in der konstruktiven Ausgestaltung des Montageautomaten oder der Programmierung des Montageautomaten hinsichtlich seines Bewegungspfads bei der Montage der Flügellagerteile sind daher nicht erforderlich, so daß ein herkömmlicher Montageautomat sowohl zur Montage von Eckumlenkungen als auch zur Montage von Flügellagerteilen gemäß der vorliegenden Erfindung verwendet werden kann.

Um eine exakte Zentrierung des erfindungsgemäßen Flügellagerteils am Greifer zu erhalten, wird vorgeschlagen, daß ein Abstand zwischen dem zweiten Anlagebereich an der Anlageerhebung und einem Innenoberflächenniveau des anderen Winkelschenkels im wesentlichen gleich einem Abstand zwischen dem ersten Anlagebereich und einer Innenoberfläche des einen Winkelschenkels ist.

Wenn dabei ferner vorgesehen ist, daß das Flügellagerteil mit der Innenoberfläche des ersten Winkelschenkels und der Innenoberfläche des zweiten Winkelschenkels an einer Auflagefläche des Flügelrahmens, vorzugsweise einer Falznutfläche, anliegt, dann ist sichergestellt, daß die Innenoberfläche jedes Winkelschenkels jeweils das Ausgangsniveau bildet, von welchem aus ein zusätzlicher Erhebungsabstand zum Kompensieren unsymmetrischer Anordnungen bemessen werden muß.

Da im allgemeinen derartige Flügellagerteile aus Blechteilen gefertigt sind, wird vorgeschlagen, daß die Anlageerhebung eine Ausbauchung des anderen Winkelschenkels umfaßt. Diese Ausbauchung kann somit in einfacher Weise durch geeignetes Verbiegen oder Verformen eines zum Aufbau des erfindungsgemäßen Flügellagerteils verwendeten Blechstreifens erhalten werden.

Bei derartigen Flügellagerteilen muß darauf geachtet werden, daß ihre Komponenten sich nicht mit anderen Komponenten eines Flügelrahmens oder Fenster- oder Türrahmens stören. Es sollten beispielsweise keine Komponenten des Flügelrahmens am feststehenden Rahmen schleifen oder anstoßen. Es wird daher vorgeschlagen, daß die Anlageerhebung lediglich in einem dem Eckbereich des Flügellagerteils nahen Abschnitt des anderen Winkelschenkels ausgebildet ist. Eine derartige Ausgestaltung hat ferner den Vorteil, daß insbesondere bei Vorsehen der Anlageerhebung durch eine Ausbauchung der andere Winkelschenkel lediglich in dem Bereich der Anlageerhebung vom Flügelrahmen abgehoben ist, d. h. nicht in einer Falznut oder dergleichen aufgenommen ist. Es kann daher trotz des Vorsehens der Ausbauchung eine stabile Fixierung des Flügellagerteils am Flügelrahmen erhalten werden.

Vorteilhafterweise ist dabei vorgesehen, daß eine Länge der Anlageerhebung in einer Längsrichtung des anderen Winkelschenkels näherungsweise gleich einer Länge der anderen Zentrier/Anlage-Fläche des Zentrier/Anlage-Winkelteils in der Längsrichtung des anderen Winkelschenkels ist.

Um das erfindungsgemäße Flügellagerteil mit einem herkömmlichen Greifer eines Montageautomaten ergreifen zu können, wird vorgeschlagen, daß an wenigstens einem der Winkelschenkel ein zum Angreifen eines Greiferfingers des Greifers ausgebildeter Angriffsabschnitt vorgesehen ist.

Dieser Angriffsabschnitt umfaßt vorzugsweise eine Öffnung oder eine vorzugsweise durch Prägen, Stanzen oder dergleichen gebildete Angriffskante bei dem wenigstens einen Winkelschenkel.

In einer weitergehenden Ausgestaltung ist die vorliegende Erfindung ferner auf ein Flügellagerteil gerichtet, bei dem das Lagerteil einen Lagerabschnitt und einen den Lagerabschnitt mit dem Befestigungsabschnitt verbindenden Verbindungsabschnitt umfaßt, wobei der Verbindungsabschnitt und der Befestigungsabschnitt entlang einer zu dem einen Winkelschenkel parallelen Verbindungslinie miteinander verbunden sind, und wobei das Lagerteil derart ausgebildet und/oder am einen Winkelschenkel angebracht ist, daß eine unmittelbar aneinander angrenzende stapelförmige Lagerung mehrerer Flügellagerteile mit zueinander im wesentlichen parallelen Flügellagerteil-Mittenebenen und einander gegenüberliegenden, vorzugsweise aneinander anstoßenden, Winkelschenkeln ermöglicht ist.

Insbesondere bei der Montage mit einem Montageautomaten ist es vorteilhaft, wenn die Flügellagerteile nicht einzeln in den Montageautomat eingelegt werden müssen, sondern wenn sie in einem Magazin zugeführt werden können. Die Zuführung in einem Magazin erfordert jedoch eine vorbestimmte Anordnung der einzelnen Flügellagerteile zueinander. Wenn dabei eine vorangehend angegebene Positionierung mit zueinander parallel liegenden Flügellagerteil-Mittenebenen und einander gegenüberliegenden Winkelschenkeln vorgesehen ist, dann sind die einzelnen Flügellagerteile durch einen Greifer leicht aus einem Magazin zu entnehmen und sind darüber hinaus in einer sehr dichten Packung gestapelt.

Flügellagerteile sind im allgemeinen derart ausgestaltet, daß zwischen der Flügellagerteil-Mittenebene und dem Lagerabschnitt eine relativ große Ausladung erhalten wird, wobei der Verbindungsabschnitt im allgemeinen dicht an einem Flügelüberschlag entlangläuft, um sich somit mit einem feststehenden Fenster- oder Türrahmen möglichst wenig zu stören. Dies bedeutet jedoch, daß zumindest bereichsweise der Verbindungsabschnitt und/oder der Befestigungsabschnitt seitlich über den einen Winkelschenkel überstehen, was bei einer dichten Aneinanderstapelung mehrerer Flügellagerteile zu Problemen führen kann. Um derartige Probleme zu vermeiden, wird vorgeschlagen, daß ein zwischen dem Verbindungsabschnitt und dem Befestigungsabschnitt im Bereich von deren Verbindung gebildeter Winkel größer als 90° ist. Mit einer derartigen Ausgestaltung ist es also möglich, den seitlichen Überstand des Befestigungsabschnitts relativ gering zu halten und durch den schrägen Verlauf des Verbindungsabschnitts dennoch eine relativ große Ausladung des Lagerabschnitts zu erhalten, ohne daß dabei eine gegenseitige Störung aneinander gestapelter Flügellagerteile auftritt.

Alternativ oder zusätzlich ist es möglich, daß der Befestigungsabschnitt an seinem mit dem Verbindungsabschnitt nicht verbundenen und diesem entgegengesetzt angeordneten freien Ende einen Randbereich aufweist, welcher bezüglich eines diesem benachbarten Seitenrandbereichs des einen Winkelschenkels in Richtung auf die Flügellagerteil-Mittenebene zu versetzt ist. Bei einer derartigen Ausgestaltung ist es dann möglich, daß ein sich seiltich über einen Flügelschenkel hinaus erstreckender Bereich des Befestigungsabschnitts den unmittelbar benachbarten Winkelschenkel eines benachbarten Flügellagerteils übergreift, ohne dabei an den Befestigungsabschnitt des benachbarten Flügellagerteils anzustoßen.

Ferner kann dabei dann vorgesehen sein, daß der Befestigungsabschnitt an seinem freien Randabschnitt abgeschrägt ist.

In einer weitergehenden Ausgestaltung ist die vorliegende Erfindung ferner auf ein Flügellagerteil gerichtet, welches wenigstens ein Zentrierteil an wenigstens einem der Winkelschenkel umfaßt, welches bei Anbringung des Flügellagerteils an einem Flügelrahmen in eine Falznut, vorzugsweise Treibstangennut, am Flügelrahmen eingreift, wobei das Zentrierteil in einem Zentrierabschnitt zwei zueinander entgegengesetzt angeordnete Zentrierflächen aufweist, die an jeweiligen Nutinnenflächen der Falznut anliegen. Durch das Zentrierteil ist sichergestellt, daß bei Anbringung des Flügellagerteils an einem Flügelrahmen eine exakte Positionierung erreicht wird, ohne daß zusätzliche korrigierende Verschiebungen vorgenommen werden müssen.

Dabei ist es vorteilhaft, wenn das Zentrierteil einen sich an den Zentrierabschnitt anschließenden und sich verjüngenden Einweisabschnitt mit den Zentrierflächen zugeordneten Einweisschrägflächen aufweist. Insbesondere bei der automatisierten Montage können durch den Einweisabschnitt geringfügige Positionsabweichungen des Greifers dadurch kompensiert werden, daß die Einweisschrägflächen das Flügellagerteil bei Annäherung an den Flügelrahmen in die richtige Positionierung drängen.

Um dabei das Einschieben des Flügellagerteils mit seinem Zentrierteil in die Falznut möglichst wenig zu beeinträchtigen, und dennoch die Zentrierwirkung beizubehalten, wird vorgeschlagen, daß an wenigstens einer Zentrierfläche wenigstens eine zur Anlage an einer der Nutinnenflächen vorgesehene Zentrierrippe angeordnet ist.

Dabei kann beispielsweise vorgesehen sein, daß die wenigstens eine Zentrierrippe sich an dem Zentrierabschnitt in einer Richtung erstreckt, die im wesentlichen orthogonal zu einer Nutlängsrichtung steht.

Wenn alternativ die wenigstens eine Zentrierrippe sich an den Zentrierabschnitt in einer Richtung erstreckt, die im wesentlichen parallel zu einer Aufschubrichtung verläuft, in welcher das Flügellagerteil beim Aufschieben auf den Flügelrahmen auf diesen zu bewegt wird, dann bietet die wenigstens eine Zentrierrippe beim Einschieben des Zentrierabschnitts in die Falznut, trotz des Vorsehens der Zentrierwirkung, einen sehr geringen Einschiebewiderstand. Beispielsweise kann dabei die wenigstens eine Zentrierrippe im wesentlichen parallel zu einer Winkelhalbierenden des Flügellagerteils verlaufen.

Um Fertigungstoleranzen bei der Herstellung von Flügelrahmen, insbesondere bei der Einbringung von Falznuten in diese, berücksichten zu können, wird vorgeschlagen, daß an jeder Zentrierfläche wenigstens eine Zentrierrippe vorgesehen ist und daß eine Breite des Zentrierteils im Bereich der Zentrierrippen größer ist als eine größtmögliche Breite der Falznut, welche größtmögliche Breite sich aus einer Falznut-Sollbreite und einer größtmöglichen Falznut-Fertigungstoleranz zusammensetzt. Bei einer derartigen Ausgestaltung wird das Zentrierteil mit seinen Zentrierrippen in die Falznut unter Verformung der Zentrierrippen und/oder des Flügelrahmens in diesem Bereich eingezwängt.

Erfindungsgemäß kann ferner vorgesehen sein, daß im Zentrierteil eine den Zentrierabschnitt und ggf. den Einweisabschnitt durchsetzende Befestigungsschraubenöffnung vorgesehen ist.

Die Erfindung wird nachfolgend mit Bezug auf die beiliegenden Zeichnungen anhand bevorzugter Ausführungsformen detailliert beschrieben. Es zeigt:
- Fig. 1: eine Seitenansicht eines an einem Flügelrahmeneck anzubringenden Flügellagerteils;
- Fig. 2a: eine schematische Schnittansicht eines an einem Flügelrahmen angebrachten Flügellagerteils längs einer Linie IIa-IIa in Fig. 1;
- Fig. 2b: eine der Fig. 2a entsprechende Ansicht längs einer Linie IIb-IIb in Fig. 1;
- Fig. 3: eine Ansicht des durch einen Greifer ergriffenen Flügellagerteils;
- Fig. 4: eine Draufsicht auf einen Stapel von Flügellagerteilen in einem Magazin zur Entnahme durch einen Greifer;
- Fig. 5: eine der Fig. 4 entsprechende Ansicht einer alternativen Ausgestaltung der Flügellagerteile;
- Fig. 6: eine Schnittansicht durch ein Zentrierteil längs einer Linie VI-VI in Fig. 7;
- Fig. 7: eine Ansicht des in Fig. 6 gezeigten Zentrierteils in Blickrichtung eines Pfeils VII in Fig. 6;
- Fig. 8: eine Ansicht des Zentrierteils in Fig. 6 in Blickrichtung eines Pfeils VIII; und
- Fig. 9: eine Seitenansicht des Zentrierteils der Fig. 6 in Blickrichtung eines Pfeils IX.

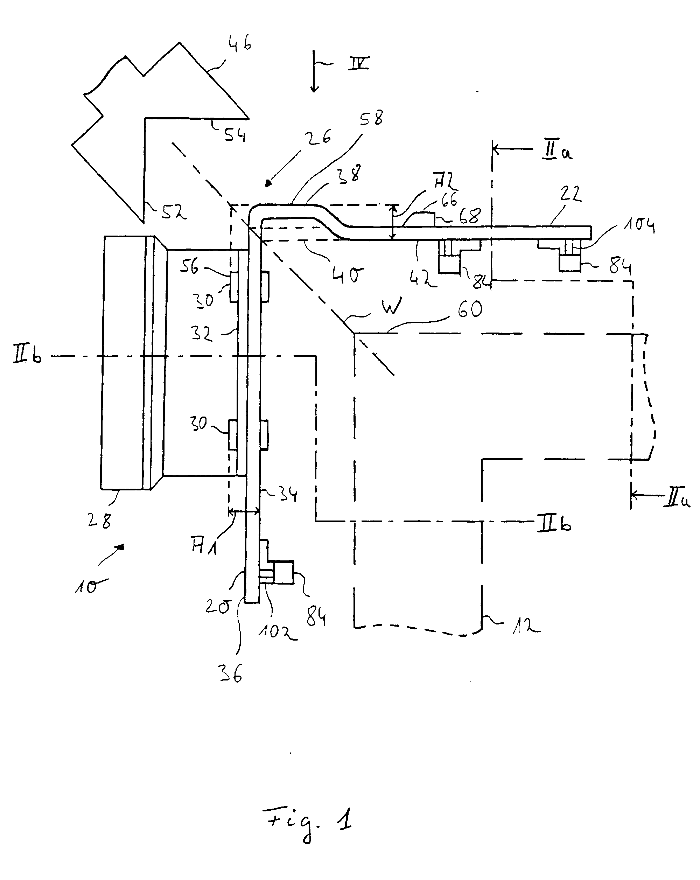

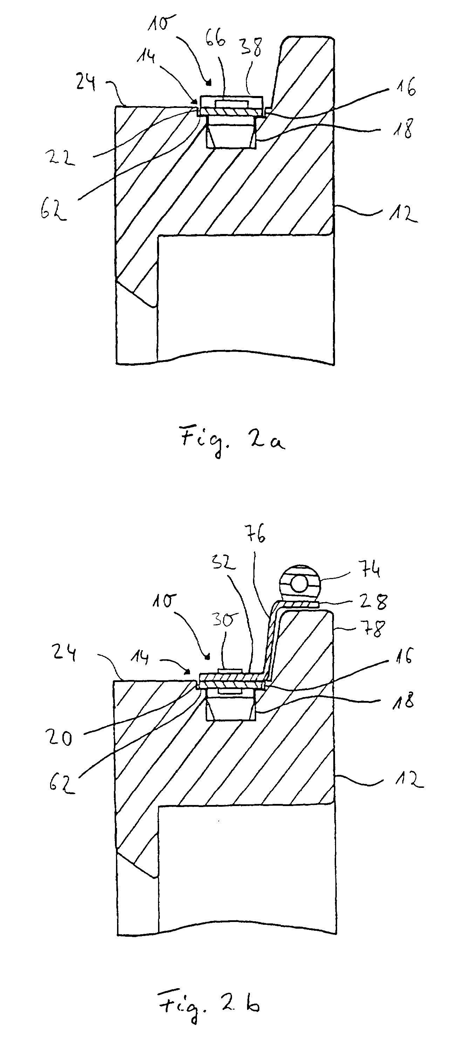

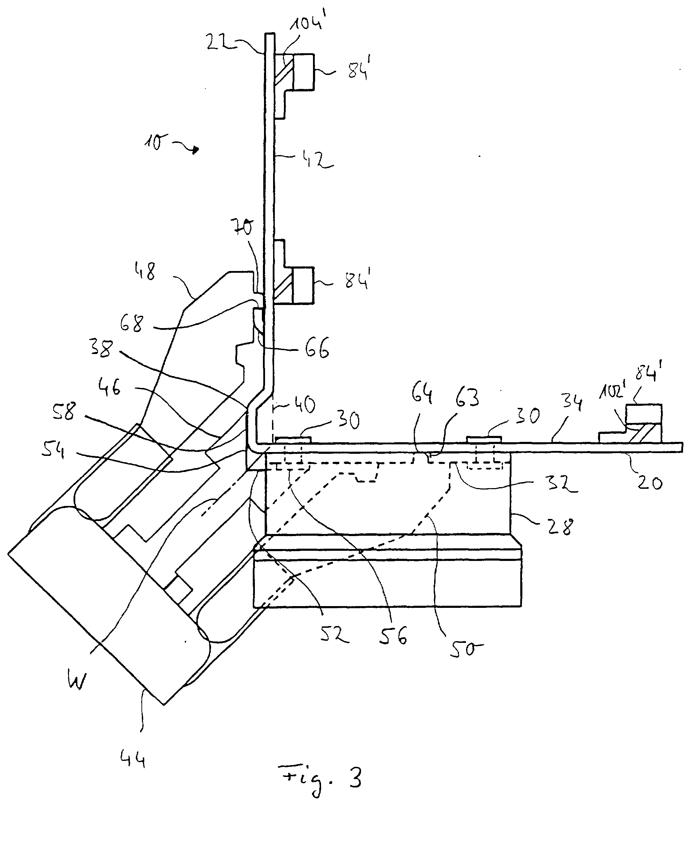

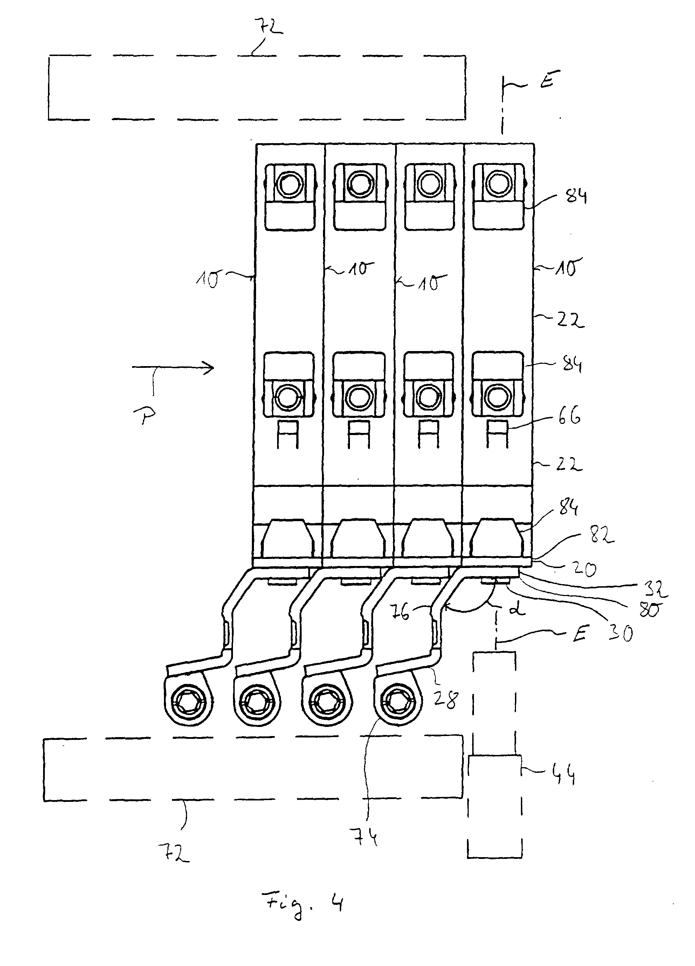

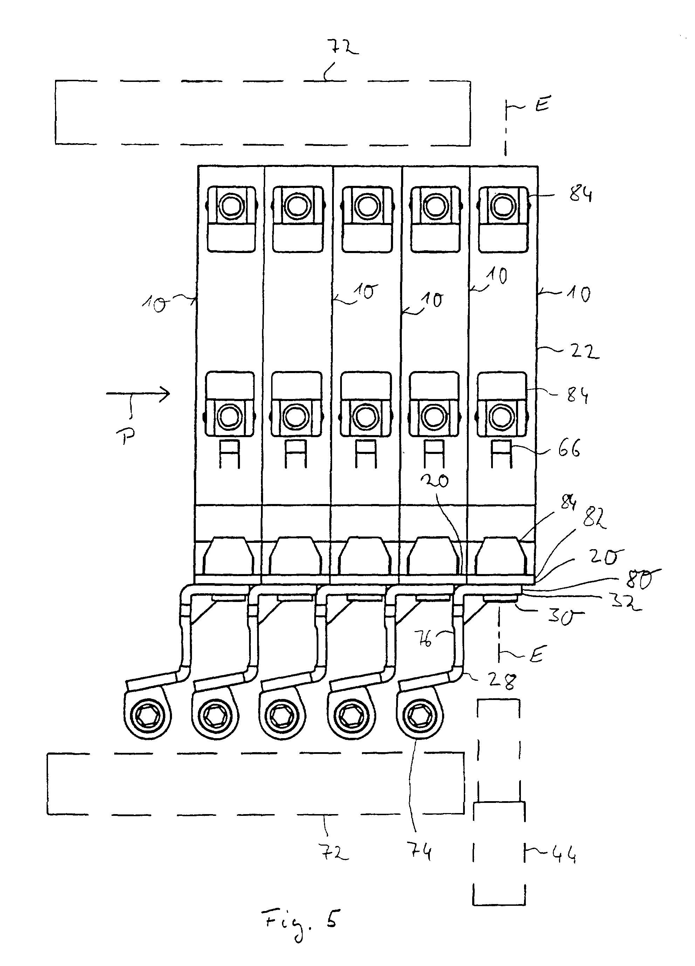

Die Fig. 1 bis 3 zeigen ein Flügellagerteil 10, welches an einem Eck eines Flügelrahmens 12 anzubringen ist. Wie in den Fig. 2a und 2b zu erkennen ist, weist dazu der Flügelrahmen 12 eine Falznut 14 auf, die gestuft ausgebildet ist, d. h. die Falznut 14 weist einen ersten breiteren Abschnitt 16 und einen sich an den breiteren Abschnitt 16 nach innen hin anschließenden schmäleren Abschnitt 18 auf. Dabei ist der breitere Nutabschnitt 16 zur nachfolgend detaillierter beschriebenen Anlage von Winkelschenkeln 20, 22 des Flügellagerteils 10 vorgesehen, so daß die Winkelschenkel 20, 22 mit ihrer Außenoberfläche im wesentlichen bündig mit der Falzumfangsfläche 24 abschließen. Der schmälere Abschnitt 18 bildet einen Treibstangen-Nutabschnitt, in welchem die beispielsweise über Eckumlenkungen (in den Figuren nicht dargestellt) miteinander verbundenen Treibstangen eines Beschlagsatzes geführt werden können.

Die beiden Winkelschenkel 20, 22 sind in einem Eckbereich 26 miteinander näherungsweise unter einem rechten Winkel verbunden. An einem der Winkelschenkel 20, 22, im nachfolgenden der erste Winkelschenkel 20 genannt, ist ein Lagerteil 28 festgelegt, mit welchem der Flügelrahmen 12 an einem komplementären Lagerteil, das an einem feststehenden Fenster- oder Türrahmen angebracht ist, schwenkbar lagerbar ist. Das Lagerteil 28 ist nahe dem Eckbereich 26 angeordnet und ist in der dargestellten Ausführungsform durch zwei Bolzen 30, beispielsweise Nietoder Schraubbolzen 30, am ersten Flügelschenkel 20 mit einem Befestigungsabschnitt 32 festgelegt. Es wird hier darauf hingewiesen, daß die Befestigung des Lagerteils 28 über seinen Befestigungsabschnitt 32 am ersten Winkelschenkel 20 in vielfältiger anderer Weise vorgenommen werden kann, beispielsweise durch Anschweißen oder dergleichen. Auch ist die Anzahl der zum Festlegen verwendeten Nieten oder Bolzen beliebig, es können also mehr als zwei oder ggf. auch nur ein einziger Bolzen 30 verwendet werden.

Durch das am ersten Winkelschenkel 20 festgelegte Lagerteil 20, d. h. durch dessen Befestigungsabschnitt 32 und die Bolzen 30 ist an dem ersten Winkelschenkel 20 ein Materialauftrag an einer Außenseite 36 gebildet, der mit einem Abstand A1 über eine Innenfläche des ersten Winkelschenkels 20 übersteht.

In komplementärer Art und Weise ist dann an dem anderen Winkelschenkel, im nachfolgenden zweiter Winkelschenkel 22 genannt, eine Ausbauchung 38 nahe dem Eckbereich 26 gebildet. Die Ausbauchung ist durch entsprechende Biegung des im allgemeinen aus Blechstreifen hergestellten Flügellagerteil 10 im Eckbereich 26 derart gebildet, daß sie über ein mit der Innenfläche 42 des zweiten Winkelschenkels 22 übereinstimmendes Innenflächenniveau 40 um einen Abstand A2 übersteht. Eine derartige Ausgestaltung des Winkelschenkels 10 ist dazu getroffen, daß dieser, wie nachfolgend erläutert wird, mit einem Montageautomaten am Flügelrahmen 12 angebracht werden kann.

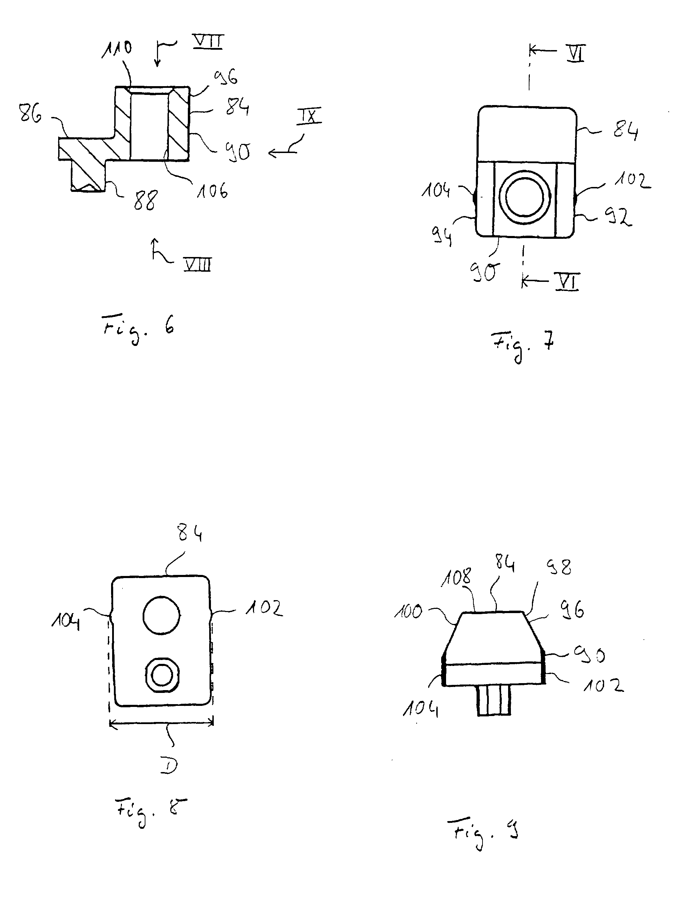

Der in den Figuren nicht explizit dargestellte Montageautomat weist einen Greifer 44 auf (siehe Fig. 3), durch welchen das Flügellagerteil 10 ergriffen werden kann und am Flügelrahmen 12 angebracht werden kann. Der Greifer 44 weist ein zentral angeordnetes Zentrier/Anlage-Winkelteil 46 sowie zwei Greiferfinger 48, 50 auf. Das Zentrier/Anlage-Winkelteil 46 weist zwei näherungsweise unter einem rechten Winkel bezüglich einander angeordnete Zentrier/Anlage-Flächen 52, 54 auf, wobei die Zentrier/Anlage-Fläche 52 dem ersten Winkelschenkel 20 zugeordnet ist und die Zentrier/Anlage-Fläche 54 dem zweiten Winkelschenkel 22 zugeordnet ist.

Soll nun das Flügellagerteil 10 mit dem Montageautomaten an dem Flügelrahmen 12 angebracht werden, so wird der Greifer 44 an einen nachfolgend beschriebenen Stapel von Flügellagerteilen 10 in einem Magazin derart herangeführt, daß der Eckbereich 26 eines Flügellagerteils 10 in dem Zentrier/Anlage-Winkelteil 46 zentriert wird. Das heißt, es kommt die Zentrier/Anlage-Fläche 52 zur Anlage an dem in der Darstellung der Fig. 1 oberen Bolzen 30, welcher im Bereich des ersten Winkelschenkels 20 den höchsten Punkt und somit einen Anlagebereich 56 für die Zentrier/Anlage-Fläche 52 bildet. In entsprechender Weise kommt die Zentrier/Anlage-Fläche 54 an der Ausbauchung 38 zu liegen, welche im Bereich des zweiten Winkelschenkels 22 den höchsten Punkt und somit einen Anlagebereich 58 bildet.

Bei dem erfindungsgemäßen Flügellagerteil 10 ist nun die Ausgestaltung derart, daß der Abstand A1 zwischen der Innenfläche 34 des ersten Winkelschenkels und dessen Anlagebereich 56 im wesentlichen gleich dem Abstand A2 zwischen dem Innenflächenniveau 40 des zweiten Winkelschenkels 22 und dessen Anlagebereichs 58 ist. Das heißt, an beiden Winkelschenkeln 20, 22 ist für den Greifer 46 eine hinsichtlich ihrer Höhe gleich ausgestaltete Erhebung gebildet, so daß bei Anlage der jeweiligen Zentrier/Anlage-Flächen 52, 54 an ihren zugeordneten Anlagebereichen 56, 58 das Flügellagerteil 10 am Greifer 46 derart gehalten ist, daß eine Winkelhalbierende W des Flügellagerteils 10 ebenso eine Winkelhalbierende W des zwischen den Zentrier/Anlage-Flächen 52, 54 am Greifer gebildeten Winkels ist. Wie in Fig. 1 zu erkennen, ist hierbei die Winkelhalbierende W des Flügellagerteils 10 derart zu verstehen, daß sie den Winkel zwischen der Innenfläche 34 des ersten Winkelschenkels 20 und der Innenfläche 42, d. h. dem Innenflächenniveau 40, des zweiten Winkelschenkels 22 halbiert.

Wird nachfolgend der Greifer 44 mit dem daran gehaltenen Flügellagerteil 10 beispielsweise in Richtung der Winkelhalbierenden W auf den Flügelrahmen 12 zu bewegt, wobei dann die Winkelhalbierende W ebenfalls die Winkelhalbierende des entsprechenden Ecks des Flügelrahmens 12 bildet, so ist aufgrund der durch die Anlagebereiche 56, 58 vorgesehenen zentrierten Halterung des Flügellagerteils 10 bezüglich des Greifers 44 eine entsprechende symmetrisch ausgebildete Positionierung des Flügellagerteils 10 bezüglich des Flügelrahmens 12 vorgesehen. Das heißt, bei Annäherung in Richtung der Winkelhalbierenden W kommt der Eckbereich 26 des Flügellagerteils 10 exakt am Eckbereich 60 des Flügelrahmens 12 zu liegen, ohne daß irgendwelche weiteren seitlichen Verschiebungen erforderlich sind. Die Innenflächen 34, 42 der beiden Winkelschenkel 20, 22 kommen dann in exakter Positionierung an einer den breiteren Nutabschnitt 16 nach unten begrenzenden Nutfläche 62 zum liegen.

Da also die Auflage der Innenflächen 34, 42 auf der Nutfläche 62 der Falznut 14 die Positionierung des Flügellagerteils 10 bezüglich des Flügelrahmens 12 definiert, ist es wichtig, die Abstände A1 und A2 der Anlagebereiche 56, 58 hinsichtlich der jeweiligen Innenfläche 34, 42, bzw. dem Innenflächenniveau 40, der Winkelschenkel 20, 22 zu bemessen. Eine derartige Bemessung hat dann zur Folge, daß, wie insbesondere in den Fig. 1 und 3 zu erkennen, die Winkelhalbierende W sowohl den Winkel zwischen den Zentrier/Anlage-Flächen 52, 54 am Zentrier/Anlage-Winkelteil 46, als auch den Winkel zwischen den Innenflächen 34, 42 bei imaginärer Verlängerung der Innenfläche 42 durch das Innenflächenniveau 40, als auch den Winkel des Flügelrahmenecks im Eckbereich 60 halbiert.

Wie in den Fig. 1 und 3 zu erkennen ist, ist die Ausbauchung 38 derart ausgebildet, daß sie sich lediglich nahe dem Eckbereich 26 erstreckt. Die Ausgestaltung kann derart sein, daß die Länge der Ausbauchung 38 in der Längsrichtung des zweiten Winkelschenkels 22 im wesentlichen mit der Länge der Zentrier/Anlage-Fläche 54 in der Längsrichtung des zweiten Winkelschenkels 22 übereinstimmt. Es ist somit einerseits sichergestellt, daß eine geeignete Anlage und Zentrierung durch die Zentrier/Anlage-Fläche 54 möglich ist, andererseits ist jedoch auch sichergestellt, daß der zweite Winkelschenkel 22 mit einem ausreichend langen Winkelschenkelabschnitt innerhalb der Falznut 14 liegt, um somit eine geeignete Fixierung des Flügellagerteils 10 am Flügelrahmen 12, d. h. in der Falznut 14, zu erhalten. Auch ist der Vorsprung des zweiten Winkelschenkels 22 über die Falzumfangsfläche möglichst kurz gehalten, so daß ein gegenseitiges Stören mit anderen Komponenten, beispielsweise Abschnitten eines festen Rahmens, auch bei Schwerkrafteinwirkung vermieden werden kann.

Es wird hier darauf hingewiesen, daß anstelle der Ausbauchung 38 andere Maßnahmen ergriffen werden können, um einen entsprechenden Abstand A2 zwischen dem Innenflächenniveau 40 und dem entsprechenden Anlagebereich 58 des zweiten Winkelschenkels 22 vorzusehen. Es ist beispielsweise auch denkbar, daß ebenso wie am ersten Winkelschenkel 20 zusätzliches Material aufgetragen wird, d. h. durch Bolzen festgelegt wird, wobei jedoch aus Gründen der einfacheren und kostengünstigeren Herstellbarkeit die durch entsprechendes Biegen erzeugte Ausbauchung 38 bevorzugt ist.

Um das Flügellagerteil 10 mit dem Greifer 44 ergreifen zu können, ist am ersten Winkelschenkel, d. h. am Befestigungsabschnitt 32 des Lagerteils 28 eine Öffnung 63 ausgebildet, in welche dann ein entsprechender Zinken am Greiferfinger 40 eingreifen kann. Am zweiten Winkelschenkel 22 ist durch Ausprägen oder Stanzen ein Zungenabschnitt 66 nach außen gebogen, welcher eine Angriffskante 68 für einen entsprechenden Zinken 70 am Greiferfinger 48 bildet. Durch derartiges Ergreifen des Flügellagerteils 10 mit den Greiferfingern 48, 50 wird das Flügellagerteil 10 mit seinem Eckbereich 26 dann in der vorangehend beschriebenen Art und Weise an den Zentrier/Anlage-Flächen 52, 54 gehalten und bezüglich der Winkelhalbierenden zwischen diesen beiden Flächen zentriert.

In Fig. 4 ist ein in einem nur schematisch dargestellten Magazin 72 enthaltener Stapel von Flügellagerteilen 10 dargestellt. Die Flügellagerteile 10 sind derart gestapelt, daß sie mit zueinander parallel liegenden Flügellagerteil-Mittenebenen E und einander gegenüberliegend angeordneten Winkelschenkeln positioniert sind. Das oberste Flügellagerteil 10 des Stapels, d. h. in der Darstellung der Fig. 4 das rechts liegende Flügellagerteil 10, kann dann durch den ebenfalls schematisch angedeuteten Greifer 44 in der vorangehend beschriebenen Art und Weise ergriffen und vom Stapel abgenommen werden. Um die Flügellagerteile 10 in geeigneter Weise an einem Flügelrahmen 12 anbringen zu können, ist es erforderlich, daß, wie in der Fig. 2b zu erkennen ist, ein Lagerabschnitt 74 des Lagerteils 28, welcher mit dem Befestigungsabschnitt 32 durch einen Verbindungsabschnitt 76 verbunden ist, seitlich bezüglich des Befestigungsabschnitts 32 und den Winkelschenkeln 20, 22 versetzt angeordnet ist. Dabei soll die Anordnung derart sein, daß der Verbindungsabschnitt 76 sich möglichst nahe an einem Flügelüberschlag 78 erstreckt. Es ist dabei im Verbindungsbereich zwischen dem Befestigungsabschnitt 32 und dem Verbindungsabschnitt 76 eine zum ersten Winkelschenkel 20 im wesentlichen parallel verlaufende Verbindungslinie vorgesehen. Um nun ein möglichst großes seitliches Ausladen des Lagerabschnitts 74 bezüglich des Befestigungsabschnitts 32 zu ermöglichen, ist der Verbindungsabschnitt 76 derart ausgebildet, daß im Bereich der Verbindung desselben mit dem Befestigungsabschnitt 32 ein Winkel α gebildet ist, welcher größer als 90° ist. Das heißt, der Verbindungsabschnitt 76 erstreckt sich vom Befestigungsabschnitt 32 schräg weg und übergreift damit das im Stapel benachbart angeordnete Flügellagerteil 10.

Um dabei die Verbindungslinie zwischen dem Verbindungsabschnitt 76 und dem Befestigungsabschnitt 32 möglichst weit zur Seite, d. h. weg von der Flügellagerteil-Mittenebene E verlagern zu können, ist ferner vorgesehen, daß ein der Verbindung mit dem Verbindungsabschnitt 76 entgegengesetzter Endbereich des Befestigungsabschnitts 32 einen Randbereich 80 bildet, welcher bezüglich eines benachbarten Randbereichs 82 des ersten Winkelschenkels 20 in Richtung auf die Flügellagerteil-Mittenebene E zu versetzt ist. Das heißt, in diesem Bereich ist Platz für den seitlich ausladenden Verbindungsabschnitt des benachbarten Flügellagerteils geschaffen. Zusätzlich kann hier vorgesehen sein, daß der Randbereich 80 des Befestigungsabschnitts 32 abgeschrägt ausgebildet ist. Bei derartiger Ausgestaltung kann also trotz des relativ großen seitlichen Abstands zwischen dem Befestigungsabschnitt 32 und dem Lagerabschnitt 74 eine mit einander entsprechenden Winkelschenkeln unmittelbar aneinander anstoßende Stapelung der einzelnen Flügellagerteile 10 im Magazin 72 vorgenommen werden.

Die Fig. 5 zeigt eine der Fig. 4 entsprechende Ansicht eines Stapels von Flügellagerteilen 10 in einem Magazin 72, bei welchen Flügellagerteilen 10 der Verbindungsabschnitt 76 und der Befestigungsabschnitt 32 derart miteinander verbunden sind, daß sie im Bereich ihrer Verbindung einen Winkel von näherungsweise 90° einschließen. Um auch bei derartiger Ausgestaltung eine relativ große seitliche Ausladung des Lagerabschnitts 74 bezüglich des Befestigungsabschnitts 32, d. h. der Flügellagerteil-Mittenebene E, zu erhalten, ist die Verbindungslinie zwischen dem Befestigungsabschnitt 32 und dem Verbindungsabschnitt 76 noch weiter von der Flügellagerteil-Mittenebene E weg verschoben und liegt seitlich neben dem zugeordneten Winkelschenkel 20. Da jedoch der Randbereich 80 der Befestigungsabschnitte 32 wiederum bezüglich des Randbereichs 82 der Winkelschenkel 20 auf die Flügellagerteil-Mittenebene E zu versetzt ist, kann das Lagerteil 28 eines Flügellagerteils 10 wieder den Winkelschenkel 20 eines unmittelbar benachbart angeordneten Flügellagerteils 10 bereichsweise übergreifen, so daß auch bei derartiger Ausgestaltung eine sehr dichte Stapelung der Flügellagerteile 10 mit unmittelbar aneinander anliegenden Winkelschenkeln 20, 22 ermöglicht ist.

Durch die Ausgestaltung der erfindungsgemäßen Flügellagerteile 10, insbesondere die Ausgestaltung und Anbringung der Lagerteile 28 am jeweiligen ersten Winkelschenkel 20, ist also eine sehr dichte Stapelung in einem Magazin 72 ermöglicht, welche eine vollautomatische Entnahme der in dem Stapel enthaltenen Flügellagerteile 10 mit dem Greifer 44 und eine darauf folgende, vollautomatische Montage an einem Flügelrahmen möglich ist. Ist ein im Stapel oben liegendes Flügellagerteil 10 durch den Greifer 44 entnommen worden, so werden die im Stapel verbleibenden Flügellagerteile 10 in Richtung eines Pfeils P nachgeführt, so daß das im Stapel nächste Flügellagerteil 10 dann im Magazin 72 derart angeordnet ist, daß es nachfolgend durch den Greifer 44 ergriffen werden kann.

Wie in den Figuren zu erkennen ist, sind an den Winkelschenkeln 20, 22 jeweils Zentrierteile 84 angeordnet, welche beim Aufschieben der Flügellagerteile 10 auf einen Flügelrahmen 12 in die Falznut 14, und insbesondere den schmaleren Nutabschnitt 18, eingreifen und somit zu einer Zentrierung der Flügellagerteile 10 in der Falznut 14 führen. Ein derartiges Zentrierteil 84 ist in den Figuren 6 bis 9 dargestellt. Das Zentrierteil 84 weist einen Fixierabschnitt 86 mit einem Befestigungskopf 88 auf. Der Befestigungskopf 88 wird in eine im jeweiligen Winkelschenkel 20 oder 22 vorgesehene Öffnung eingeschoben und dann durch Verformung aufgespreizt, so daß das Zentrierteil 84 am jeweiligen Winkelschenkel festgehalten ist. Ferner weist das Zentrierteil 84 einen mit dem Fixierabschnitt 86 einteilig ausgebildeten Zentrierabschnitt 90 auf, welcher zwei entgegengesetzt angeordnete Zentrierflächen 92, 94 umfaßt, die zur Anlage an die jeweiligen Nutinnenflächen des schmalen Nutabschnitts 18 vorgesehen sind. An den Zentrierabschnitt 90 schließt sich ein Einweisabschnitt 96 mit Einweisschrägflächen 98, 100 an, wobei jeder Zentrierfläche 92, 94 eine der Einweisschrägflächen 98, 100 zugeordnet ist. Es können durch die Einweisschrägflächen beim Bewegen des Flügellagerteils 10 auf den Flügelrahmen 12 zu geringe Bewegungsungenauigkeiten kompensiert werden, da durch die Einweisschrägflächen 98, 100 die Zentrierteile 84 in die jeweiligen Abschnitte der Falznut 14 gedrängt werden.

Ferner ist an jeder der Zentrierflächen 92, 94 eine Zentrierrippe 102, 104 ausgebildet. Dabei ist die Breite D des Zentrierteils 84 im Bereich der Zentrierrippen 102, 104 derart gewählt, daß sie geringfügig größer ist als eine maximal mögliche Breite des schmalen Abschnitts 18 der Falznut 14. Unter maximaler Breite ist hier eine derartige Breite zu verstehen, die sich aus einer Sollbreite dieses schmalen Nutabschnitts 18 und der maximal möglichen Fertigungstoleranz ergibt. Es ist somit sichergestellt, daß auch bei relativ großen Fertigungstoleranzen die Zentrierteile 84 immer mit ihren Zentrierrippen 102, 104 zur Anlage an entsprechenden Nutinnenflächen kommen können. Dabei wird beim Aufschieben des Flügellagerteils 10 auf den Flügelrahmen 12 das Zentrierteil 84 im Bereich der Zentrierrippen 102, 104 und/oder der Flügelrahmen 12 im entsprechenden Bereich der Falznut 18 verformt. Welches der Bauteile verformt wird, hängt von der jeweiligen Materialauswahl ab. Besteht beispielsweise das Zentrierteil aus Metall und besteht der Flügelrahmen 12 aus Holz und Kunststoff, so wird im allgemeinen das weichere Holz oder Kunststoffmaterial verformt werden.

Bei der Darstellung der Fig. 1 ist zu erkennen, daß die Zentrierrippen 102, 104 sich jeweils im wesentlichen orthogonal zu den Winkelschenkeln 22 bzw. 20 erstrecken, d. h. orthogonal zu einer Längsrichtung der Falznut 14 erstrecken. Bei einer derartigen Anordnung der Zentrierrippen 102, 104 sind alle am Flügellagerteil 10 angeordneten Zentrierteile 84 gleich ausgebildet, d. h. es muß lediglich ein Bauteil bereitgehalten werden. In Fig. 3 ist eine Anordnung der Zentrierrippen 102', 104' vorgesehen, bei welcher diese sich in der Richtung der Winkelhalbierenden W erstrecken. Das heißt, beim Aufschieben des Flügellagerteils 10 gemäß Fig. 3 auf den Flügelrahmen 12 bieten die Zentrierrippen 102', 104' nur einen relativ geringen Aufschiebewiderstand, wodurch die Montage vereinfacht wird. Bei einer derartigen Ausgestaltung müssen jedoch die beiden am zweiten Winkelschenkel 22 angeordneten Zentrierteile 84' zueinander verschieden ausgebildet werden, da sie hinsichtlich der Positionierung des Fixierabschnitts und des Zentrierabschnitts unterschiedlich am Winkelschenkel 22 angebracht sind.

Wie in den Figuren 6 und 7 weiter zu erkennen ist, ist im Zentrierteil 84 eine den Zentrierabschnitt 90 und den Einweisabschnitt 96 durchsetzende Befestigungsschraubenöffnung 106 ausgebildet. Durch die Befestigungsschraubenöffnung 106 hindurch kann dann eine eine entsprechende Öffnung im Winkelschenkel durchsetzende Befestigungsschraube in dem Flügelrahmen 12 eingeschraubt werden, um somit das Flügellagerteil 10 am Flügelrahmen 12 festzulegen. Da beim Einschrauben der Befestigungsschrauben in den Flügelrahmen, insbesondere bei Verwendung von Kunststoff-Flügelrahmen, in dem Bereich, in dem die Schraube in das Material des Flügelrahmens eindringt, ein geringer Materialaufwurf, d. h. ein die Befestigungsschraube umgebender Materialwulst erzeugt wird, ist in einem dem Nutboden nahen Bereich des Zentrierteils 84, d. h. in einer Stirnfläche 108 des Einweisabschnitts 96, ein erweiterter Abschnitt 110 der Befestigungsschraubenöffnung 106 ausgebildet, in welcher dann der am Flügelrahmen 12 gebildete Materialaufwurf aufgenommen werden kann. Es ist somit sichergestellt, daß das Flügellagerteil 10 über die Innenflächen 34, 42 der Winkelschenkel 20, 22 in der vorgesehenen Art und Weise an der Nutfläche 62 des breiteren Nutabschnitts 16 aufliegen kann.

Durch die vorliegende Erfindung ist ein Flügellagerteil 10 vorgesehen, welches trotz des an einem der Winkelschenkel angebrachten Lagerabschnitts mit einem herkömmlichen Montageautomaten, wie er auch zur Montage von in ihren Eckbereich symmetrisch ausgebildeten Eckumlenkungen verwendet wird, an einem Flügelrahmen angebracht werden kann. Ferner sind die erfindungsgemäßen Flügellagerteile derart ausgestaltet, daß sie mit unmittelbar aneinander anliegenden Winkelschenkeln und zueinander parallelen Flügellagerteil-Mittenebenen in einem Magazin gestapelt werden können, auch wenn eine relativ große seitliche Ausladung des Lagerabschnitts der Lagerteile bezüglich der Flügellagerteil-Mittenebene E vorgesehen ist. Darüber hinaus ist durch das Anordnen von Zentrierteilen am Flügellagerteil eine genaue und sichere Positionierung des Flügellagerteils bezüglich der Falznut bei der automatischen Montage vorgesehen.

## Patentansprüche

1. Flügellagerteil, insbesondere für einen Fenster- oder Türflügel, welches Flügellagerteil (10) zur im wesentlichen automatischen Montage an einem Flügelrahmen (12) vermittels eines Montageautomaten ausgebildet ist, der einen Greifer (44) mit einem Zentrier/Anlage-Winkelteil (46) umfaßt, das zwei unter einem vorbestimmten Winkel zueinander stehende Zentrier/Anlage-Flächen (52, 54) zur Zentrierung/Anlage eines Eckbereichs (26) des Flügellagerteils (10) aufweist, wobei das Flügellagerteil (10) umfaßt:
- einen ersten Winkelschenkel (20),
- einen zweiten Winkelschenkel (22), welcher in dem Eckbereich (26) mit dem ersten Winkelschenkel (20) im wesentlichen unter dem vorbestimmten Winkel, vorzugsweise einem näherungsweise rechten Winkel, verbunden ist, wobei jedem der Winkelschenkel (20, 22) eine der Zentrier/Anlage-Flächen (52, 54) des Zentrier/Anlage-Winkelteils (46) zugeordnet ist zur Zentrierung/Anlage des Flügellagerteils (10) am Zentrier/Anlage-Winkelteil (46),
- ein Lagerteil (28), welches mit einem Befestigungsabschnitt (32) durch Befestigungsbolzen (30), Anschweißen oder dergleichen an einer Außenseite (36) von einem (20) der Winkelschenkel (20, 22) angebracht ist, wobei der eine Winkelschenkel (20) über einen an dem Befestigungsabschnitt (32) und/oder den Befestigungsbolzen (30) oder dergleichen gebildeten ersten Anlagebereich (52) zur Anlage an einer (52) der Zentrier/Anlage-Flächen (52, 54) bringbar ist,
- eine Anlageerhebung (38) an dem anderen (22) der Winkelschenkel (20, 22), welche Anlageerhebung (38) einen zweiten Anlagebereich (58) vorsieht, über den der andere Winkelschenkel (22) zur Anlage an der anderen (54) der Zentrier/Anlage-Flächen (52, 54) des Zentrier/Anlage-Winkelteils (46) bringbar ist.

2. Flügellagerteil nach Anspruch 1, **dadurch gekennzeichnet, daß** ein Abstand (A2) zwischen dem zweiten Anlagebereich (58) an der Anlageerhebung (38) und einem Innenoberflächenniveau (40) des anderen Winkelschenkels (22) im wesentlichen gleich einem Abstand (A1) zwischen dem ersten Anlagebereich (56) und einer Innenoberfläche (34) des einen Winkelschenkels (20) ist.

3. Flügellagerteil nach Anspruch 2, **dadurch gekennzeichnet, daß** das Flügellagerteil (10) mit der Innenoberfläche (34) des ersten Winkelschenkels (20) und der Innenoberfläche (42) des zweiten Winkelschenkels (22) an einer Auflagefläche (62) des Flügelrahmens (12), vorzugsweise einer Falznutfläche (62), anliegt.

4. Flügellagerteil nach Anspruch 1, 2 oder 3, **dadurch gekennzeichnet, daß** die Anlageerhebung (38) eine Ausbauchung (38) des anderen Winkelschenkels (22) umfaßt.

5. Flügellagerteil nach einem der Ansprüche 1 bis 4, **dadurch gekennzeichnet, daß** die Anlageerhebung (38) lediglich in einem dem Eckbereich (26) des Flügellagerteils (10) nahen Abschnitt des anderen Winkelschenkels (22) ausgebildet ist.

6. Flügellagerteil nach Anspruch 5, **dadurch gekennzeichnet, daß** eine Länge der Anlageerhebung (38) in einer Längsrichtung des anderen Winkelschenkels (22) näherungsweise gleich einer Länge der anderen Zentrier/Anlage-Fläche (54) des Zentrier/Anlage-Winkelteils (46) in der Längsrichtung des anderen Winkelschenkels (22) ist.

7. Flügellagerteil nach einem der Ansprüche 1 bis 6, **dadurch gekennzeichnet, daß** an wenigstens einem der Winkelschenkel (20, 22) ein zum Angreifen eines Greiferfingers (48, 50) des Greifers (44) ausgebildeter Angriffsabschnitt (63, 66, 68) vorgesehen ist.

8. Flügellagerteil nach Anspruch 7, **dadurch gekennzeichnet, daß** der Angriffsabschnitt (63, 66, 68) eine Öffnung (63) oder eine vorzugsweise durch Prägen, Stanzen oder dergleichen gebildete Angriffskante (68) bei dem wenigstens einen Winkelschenkel (20, 22) umfaßt.

9. Flügellagerteil nach einem der vorhergehenden Ansprüche, **dadurch gekennzeichnet, daß** das Lagerteil (28) einen Lagerabschnitt (74) und einen den Lagerabschnitt (74) mit dem Befestigungsabschnitt (32) verbindenden Verbindungsabschnitt (76) umfaßt, wobei der Verbindungsabschnitt (76) und der Befestigungsabschnitt (32) entlang einer zu dem einen Winkelschenkel (20) parallelen Verbindungslinie miteinander verbunden sind, und wobei das Lagerteil (28) derart ausgebildet und/oder am einen Winkelschenkel (20) angebracht ist, daß eine unmittelbar aneinander angrenzende stapelförmige Lagerung mehrerer Flügellagerteile (10) mit zueinander im wesentlichen parallelen Flügellagerteil-Mittenebenen (E) und einander gegenüberliegenden, vorzugsweise aneinander anstoßenden, Winkelschenkeln (20, 22) ermöglicht ist.

10. Flügellagerteil nach Anspruch 9, **dadurch gekennzeichnet, daß** ein zwischen dem Verbindungsabschnitt (74) und dem Befestigungsabschnitt (32) im Bereich von deren Verbindung gebildeter Winkel (α) größer als 90° ist.

11. Flügellagerteil nach Anspruch 9 oder 10, **dadurch gekennzeichnet, daß** der Befestigungsabschnitt (32) an seinem mit dem Verbindungsabschnitt (74) nicht verbundenen und diesem entgegengesetzt angeordneten freien Ende einen Randbereich (80) aufweist, welcher bezüglich eines diesem benachbarten Seitenrandbereichs (82) des einen Winkelschenkels (20) in Richtung auf die Flügellagerteil-Mittenebene (E) zu versetzt ist.

12. Flügellagerteil nach Anspruch 10 oder 11, **dadurch gekennzeichnet, daß** der Befestigungsabschnitt (32) an seinem freien Randbereich (80) abgeschrägt ist.

13. Flügellagerteil nach einem der vorhergehenden Ansprüche, ferner umfassend wenigstens ein Zentrierteil (84) an wenigstens einem der Winkelschenkel (20, 22), welches bei Anbringung des Flügellagerteils (10) an einem Flügelrahmen (12) in eine Falznut (14, 18), vorzugsweise Treibstangennut (18), am Flügelrahmen (12) eingreift, wobei das Zentrierteil (84) in einem Zentrierabschnitt (90) zwei zueinander entgegengesetzt angeordnete Zentrierflächen (92, 94) aufweist, die an jeweiligen Nutinnenflächen der Falznut (14, 18) anliegen.

14. Flügellagerteil nach Anspruch 13, **dadurch gekennzeichnet, daß** das Zentrierteil (84) einen sich an den Zentrierabschnitt (90) anschließenden und sich verjüngenden Einweisabschnitt (96) mit den Zentrierflächen (92, 94) zugeordneten Einweisschrägflächen (98, 100) aufweist.

15. Flügellagerteil nach Anspruch 13 oder 14, **dadurch gekennzeichnet, daß** an wenigstens einer Zentrierfläche (92, 94) wenigstens eine zur Anlage an einer der Nutinnenflächen vorgesehene Zentrierrippe (102, 104) angeordnet ist.

16. Flügellagerteil nach Anspruch 15, **dadurch gekennzeichnet, daß** die wenigstens eine Zentrierrippe (102, 104) sich an dem Zentrierabschnitt (90) in einer Richtung erstreckt, die im wesentlichen orthogonal zu einer Nutlängsrichtung steht.

17. Flügellagerteil nach Anspruch 15, **dadurch gekennzeichnet, daß** die wenigstens eine Zentrierrippe (102', 104') sich an den Zentrierabschnitt in einer Richtung erstreckt, die im wesentlichen parallel zu einer Aufschubrichtung (W) verläuft, in welcher das Flügellagerteil (10) beim Aufschieben auf den Flügelrahmen (12) auf diesen zu bewegt wird.

18. Flügellagerteil nach Anspruch 17, **dadurch gekennzeichnet, daß** die wenigstens eine Zentrierrippe (102', 104') im wesentlichen parallel zu einer Winkelhalbierenden (W) des Flügellagerteils (10) verläuft.

19. Flügellagerteil nach einem der Ansprüche 15 bis 18, **dadurch gekennzeichnet, daß** an jeder Zentrierfläche (92, 94) wenigstens eine Zentrierrippe (102, 104) vorgesehen ist und daß eine Breite (D) des Zentrierteils (84) im Bereich der Zentrierrippen (102, 104) größer ist als eine größtmögliche Breite der Falznut (14, 18), welche größtmögliche Breite sich aus einer Falznut-Sollbreite and einer größtmöglichen Falznut-Fertigungstoleranz zusammensetzt.

20. Flügellagerteil nach einem der Ansprüche 13 bis 19, **dadurch gekennzeichnet, daß** im Zentrierteil (84) eine den Zentrierabschnitt (90) und ggf. den Einweisabschnitt (96) durchsetzende Befestigungsschraubenöffnung (106) vorgesehen ist.

## Claims

1. A sash bearing element, in particular for a window or door sash, which sash bearing element (10) is designed for substantially automatic mounting on a casement sash (12) by means of an automatic assembly machine, which comprises a gripper (44) having a centring/seating angle part (46), which comprises two centring/seating faces (52, 54) arranged at a predetermined angle to one another for centring/seating of a corner area (26) of the sash bearing element (10), wherein the sash bearing element (10) comprises:
- a first angle leg (20),
- a second angle leg (22), which is connected in the corner area (26) with the first angle leg (20) substantially at the predetermined angle, preferably approximately a right angle, wherein one of the centring/seating faces (52, 54) of the centring/seating angle part (46) is associated with each of the angle legs (20, 22) for centring/seating of the sash bearing element (10) against the centring/seating angle part (46),
- a bearing element (28), which is fitted via a fastening portion (32) by fastening bolts (30), welding or the like to an outer side (36) of one (20) of the angle legs (20, 22), wherein the one angle leg (20) may be seated against one (52) of the centring/seating faces (52, 54) via a first seating area (52) formed on the fastening portion (32) and/or the fastening bolts (30) or the like,
- an elevated seating portion (38) on the other (22) of the angle legs (20, 22), which elevated seating portion (38) provides a second seating area (58), via which the other angle leg (22) may be seated against the other (54) of the centring/seating faces (52, 54) of the centring/seating angle part (46).

2. A sash bearing element according to claim 1, **characterised in that** a distance (A2) between the second seating area (58) on the elevated seating portion (38) and an inner surface level (40) of the other angle leg (22) is substantially equal to a distance (A1) between the first seating area (56) and an inner surface (34) of the one angle leg (20).

3. A sash bearing element according to claim 2, **characterised in that** the sash bearing element (10) lies with the inner surface (34) of the first angle leg (20) and the inner surface (42) of the second angle leg (22) against a bearing surface (62) of the casement sash (12), preferably a rebate groove surface (62).

4. A sash bearing element according to claim 1, 2 or 3, **characterised in that** the elevated seating portion (38) comprises a bulge (38) in the other angle leg (22).

5. A sash bearing element according to one of claims 1 to 4, **characterised in that** the elevated seating portion (38) is constructed only in a portion of the other angle leg (22) near to the corner area (26) of the sash bearing element (10).

6. A sash bearing element according to claim 5, **characterised in that** the length of the elevated seating portion (38) in the longitudinal direction of the other angle leg (22) is approximately equal to the length of the other centring/seating face (54) of the centring/seating angle part (46) in the longitudinal direction of the other angle leg (22).

7. A sash bearing element according to one of claims 1 to 6, **characterised in that** an engagement portion (63, 66, 68) designed for engagement of a gripper finger (48, 50) of the gripper (44) is provided on at least one of the angle legs (20, 22).

8. A sash bearing element according to claim 7, **characterised in that** the engagement portion (63, 66, 68) comprises an opening (63) or an engagement edge (68), preferably formed by embossing, punching or the like, at the at least one angle leg (20, 22).

9. A sash bearing element according to one of the preceding claims, **characterised in that** the bearing element (28) comprises a bearing portion (74) and a connecting portion (76) connecting the bearing portion (74) to the fastening portion (32), wherein the connecting portion (76) and the fastening portion (32) are connected together along a connecting line parallel to the one angle leg (20), and wherein the bearing element (28) is so designed and/or fitted to the one angle leg (20) that it is possible for a plurality of sash bearing elements (10) to be stored stacked directly adjacent one another, with sash bearing element central planes (E) substantially parallel to one another and angle legs (20, 22) lying opposite one another and preferably adjoining one another.

10. A sash bearing element according to claim 9, **characterised in that** an angle (α) formed between the connecting portion (74) and the fastening portion (32) in the area of the junction thereof is greater than 90°.

11. A sash bearing element according to claim 9 or 10, **characterised in that**, at its free end not connected with the connecting portion (74) and arranged opposite thereto, the fastening portion (32) comprises an edge area (80), which is offset relative to a side edge area (82) adjacent thereto of the one angle leg (20) in the direction of the sash bearing element central plane (E).

12. A sash bearing element according to claim 10 or 11, **characterised in that** the fastening portion (32) is bevelled at its free edge area (80).

13. A sash bearing element according to one of the preceding claims, further comprising at least one centring element (84) on at least one of the angle legs (20, 22), which centring element (84) engages in a rebate groove (14, 18), preferably a connecting rod groove (18), in a casement sash (12) upon fitting of the sash bearing element (10) to the casement sash (12), wherein the centring element (84) comprises in a centring portion (90) two mutually opposed centring faces (92, 94), which rest against respective inner faces of the rebate groove (14, 18).

14. A sash bearing element according to claim 13, **characterised in that** the centring element (84) comprises a tapering guide-in portion (96) adjoining the centring portion (90) and having sloping guide-in faces (98, 100) associated with the centring faces (92, 94).

15. A sash bearing element according to claim 13 or 14, **characterised in that** at least one centring rib (102, 104) provided for seating against one of the groove inner faces is arranged on at least one centring face (92, 94).

16. A sash bearing element according to claim 15, **characterised in that** the at least one centring rib (102, 104) extends on the centring portion (90) in a direction which is substantially orthogonal to the longitudinal direction of the groove.

17. A sash bearing element according to claim 15, **characterised in that** the at least one centring rib (102', 104') extends on the centring portion in a direction which is substantially parallel to a push-on direction (W), in which the sash bearing element (10) is moved towards the casement sash (12) when being pushed thereonto.

18. A sash bearing element according to claim 17, **characterised in that** the at least one centring rib (102', 104') extends substantially parallel to an angle bisecting line (W) of the sash bearing element (10).

19. A sash bearing element according to one of claims 15 to 18, **characterised in that** at least one centring rib (102, 104) is provided on each centring face (92, 94) and **in that** the width (D) of the centring element (84) is greater in the area of the centring ribs (102, 104) than the largest possible width of the rebate groove (14, 18), which largest possible width is composed of a desired rebate groove width and the greatest possible rebate groove manufacturing tolerance.

20. A sash bearing element according to one of claims 13 to 19, **characterised in that** a fastening screw opening (106) passing through the centring portion (90) and optionally the guide-in portion (96) is provided in the centring element (84).

## Revendications

1. Pièce de support de battant, en particulier pour un battant de fenêtre ou de porte, laquelle pièce de support de battant (10) est conçue pour le montage pour l'essentiel automatique sur un châssis de battant (12) au moyen d'un robot de montage, qui comprend une pince (44) avec une pièce d'angle de centrage ou de butée (46), qui comprend deux surfaces de centrage ou de butée (52, 54), situées Tune par rapport à l'autre sous un angle prédéfini pour le centrage ou la butée d'une zone d'angle (26) de la pièce de support de battant (10), la pièce de support de battant (10) comprenant :
- un premier côté d'angle (20),
- un second côté d'angle (22), lequel est relié dans la zone d'angle (26) au premier côté d'angle (20) sensiblement sons l'angle prédéfini, de préférence un angle approximativement droit, une des surfaces de centrage ou de butée (52, 54) de la pièce d'angle de centrage ou de butée (46) étant adjointe à chacun des côtés d'angle (20, 22) pour le centrage ou la butée de la pièce de support de battant (10) sur la pièce d'angle de centrage ou de butée (46),
- une pièce de support (28), laquelle est aménagée avec une section de fixation (32) grâce à des boulons de fixation (30), le soudage ou analogue sur un côté extérieur (36) d'un (20) des côtés d'angle (20, 22), l'un des côtés d'angle (20) pouvant être amené par l'intermédiaire dune première zone de butée (52) formée sur la section de fixation (32) et/ou les boulons de fixation (30) ou analogue, pour la butée sur une (52) des surfaces de centrage ou de butée (52, 54),
- une élévation de butée (38) sur l'autr (22) des côtés d'angle (20, 22), laquelle élévation de butée (38) prévoit une seconde zone de butée (58), par l'intermédiaire de laquelle l'autr côté d'angle (22) peut être amené en butée sur l'autre (54) des surfaces de centrage ou de butée (52, 54) de la pièce d'angle de centrage ou de butée (46).

2. Pièce de support de battant selon la revendication 1, **caractérisée en ce qu'**un écart (A2) entre la seconde zone de butée (58) sur l'élévation de butée (38) et un niveau de surface intérieure (40) de l'autre côté d'angle (22) est sensiblement égal à un écart (A1) entre la première zone de butée (56) et une surface intérieure (34) de l'un des côtés d'angle (20).

3. Pièce de support de battant selon la revendication 2, **caractérisée en ce que** la pièce de support de battant (10), avec la surface intérieure (34) du premier côté d'angle (20) et la surface intérieure (42) du second côté d'angle (22), est adjacente à une surface de butée (62) du châssis de battant (12), de préférence à une surface de rainure de feuillure (62).

4. Pièce de support de battant selon la revendication 1, 2 ou 3, **caractérisée en ce que** l'élévation de butée (38) comprend un évasement (38) de l'autre côté d'angle (22).

5. Pièce de support de battant selon Tune des revendications 1 à 4, **caractérisée en ce que** l'élévation de butée (38) est conçue simplement dans une section de l'autr côté d'angle (22) proche de la zone d'angle (26) de la pièce de support de battant (10).

6. Pièce de support de battant selon la revendication 5, **caractérisée en ce qu'**une longueur de l'élévation de butée (38) dans un sens longitudinal de l'autr côté d'angle (22) est approximativement égale à une longueur de l'autre surface de centrage ou de butée (54) de la pièce d'angle de centrage ou de butée (46) dans le sens longitudinal de l'autre côté d'angle (22).

7. Pièce de support de battant selon l'une des revendications 1 à 6, **caractérisée en ce qu'**est prévue sur au moins un des côtés d'angle (20, 22) une section de saisie (63, 66, 68) pour la saisir par un doigt de pince (48, 50) de la pince (44).

8. Pièce de support de battant selon la revendication 7, **caractérisée en ce que** la section de saisie (63, 66, 68) comprend une ouverture (63) ou une arête de saisie (68) formée de préférence par estampage, découpage ou analogue dans au moins un des côtés d'angle (20, 22).

9. Pièce de support de battant selon Tune des revendications précédentes, **caractérisée en ce que** la pièce de support (28) comprend une section de support (74) et une section de liaison (76) reliant la section de support (74) à la section de fixation (32), la section de liaison (76) et la section de fixation (32) étant reliées Tune à l'autre le long dune ligne de liaison parallèle à l'u des côtés d'angle (20), et la pièce de support (28) étant aménagée sur un côté d'angle (20) et/ou conçue de telle sorte qu'est permise une disposition en forme de pile immédiatement adjacente Tune à l'autre de plusieurs pièces de support de battant (10), avec des plans médians de pièce de support de battant (E) sensiblement parallèles les uns aux autres et des côtés d'angle (20, 22) opposés l'un à l'autre de préférence adjacents l'un à l'autre.

10. Pièce de support de battant selon la revendication 9, **caractérisée en ce qu'**un angle (α) formé entre la section de liaison (74) et la section de fixation (32) au voisinage de leur liaison est supérieur à 90°.

11. Pièce de support de battant selon la revendication 9 ou 10, **caractérisée en ce que** la section de fixation (32) comprend, sur son extrémité libre non reliée à la section de liaison (74) et disposée à l'oppos de celle-ci, une zone de délimitation (80), laquelle est destinée à être déplacée par rapport à une zone de délimitation (82) latérale voisine de celle-ci d'un des côtés d'angle (20) en direction du plan médian de la pièce de support de battant (E).

12. Pièce de support de battant selon la revendication 10 ou 11, **caractérisée en ce que** la section de fixation (32) est chanfreinée sur sa zone de délimitation libre (80).

13. Pièce de support de battant selon Tune des revendications précédentes, comprenant en outre au moins une pièce de centrage (84) sur au moins un des côtés d'angle (20, 22), laquelle intervient lors de la mise en place de la pièce de support de battant (10) sur un châssis de battant (12) dans une rainure de feuillure (14, 18), de préférence une rainure de bielle (18), sur le châssis de battant (12), la pièce de centrage (84) comprenant dans une section de centrage (90) deux surfaces de centrage (92, 94) opposées Tune à l'autre qui sont adjacentes aux surfaces intérieures de rainure respectives de la rainure de feuillure (14, 18).

14. Pièce de support de battant selon la revendication 13, **caractérisée en ce que** la pièce de centrage (84) comprend une section d'orientation (96) adjacente à la section de centrage (90) et se rétrécissant, avec des biseaux d'orientation (98, 100) adjoints aux surfaces de centrage (92, 94).

15. Pièce de support de battant selon la revendication 13 ou 14, **caractérisée en ce que** sur au moins une surface de centrage (92, 94) est formée au moins une nervure de centrage (102, 104) prévue pour la butée sur une des surfaces intérieures de rainure.

16. Pièce de support de battant selon la revendication 15, **caractérisée en ce qu'**au moins une des nervures de centrage (102, 104) s'étend sur la section de centrage (90) dans une direction qui est sensiblement orthogonale à un sens longitudinal de rainure.

17. Pièce de support de battant selon la revendication 15, **caractérisée en ce qu'**au moins une des nervures de centrage (102', 104') s'étend sur la section de centrage dans une direction qui est sensiblement parallèle à une direction de poussée (W), dans laquelle la pièce de support de battant (10) est destinée à être déplacée, lors dune poussée sur le châssis de battant (12), sur celui-ci.

18. Pièce de support de battant selon la revendication 17, **caractérisée en ce qu'**au moins une des nervures de centrage (102', 104') est sensiblement parallèle à une bissectrice (W) de la pièce de support de battant (10).

19. Pièce de support de battant selon l'une des revendications 15 à 18, **caractérisée en ce qu'**est prévue au moins une nervure de centrage (102, 104) sur chaque surface de centrage (92, 94), et **en ce qu'**une largeur (D) de la pièce de centrage (84) au voisinage des nervures de centrage (102, 104) est supérieure à une largeur la plus grande possible de la rainure de feuillure (14, 18), laquelle largeur la plus grande possible se compose dune largeur théorique de rainure et dune tolérance de fabrication de rainure la plus grande possible.

20. Pièce de support de battant selon l'une des revendications 13 à 19, **caractérisée en ce qu'**est prévue une ouverture de vis de fixation (106) traversant, dans la pièce de centrage (84), la section de centrage (90) et le cas échéant la section d'orientation (96).
